Europäisches Patentamt

European Patent Office

Office européen des brevets

(11) Veröffentlichungsnummer: **0 292 769**
**A2**

## EUROPÄISCHE PATENTANMELDUNG

(21) Anmeldenummer: 88107442.1

(22) Anmeldetag: 09.05.88

(51) Int. Cl.⁴: **H04M 3/24**

(30) Priorität: 25.05.87 DE 3717551

(43) Veröffentlichungstag der Anmeldung:
30.11.88 Patentblatt 88/48

(84) Benannte Vertragsstaaten:
**AT BE CH DE FR GB IT LI NL SE**

(71) Anmelder: **Siemens Aktiengesellschaft Berlin
und München**
**Wittelsbacherplatz 2**
**D-8000 München 2(DE)**

(72) Erfinder: **Stadler, Monika**
**Kederbacherstrasse 16**
**D-8000 München 70(DE)**

(54) **Prüfadapter für einen digitalen Tongenerator.**

(57) Um eine Prüfung im laufenden Betrieb der Vermittlungsstelle vornehmen zu können, ist der Prüfadapter über eine Steckverbindung an die zum Koppelfeld führenden Zeitmultiplexleitungen (SPH0, SPH1) und an die Takt- und Synchronisierimpulse führenden Leitungen (4MHz, SYP) angeschlossen. Er enthält eine Kanalauswahlschaltung (Z1, Z2, V, A, T), und einen Digital-Analog-Wandler (D/A) für die vom Tongenerator (TOG) erzeugten digitalen Hörtonsignale, die dann über einen umschaltbaren Impedanzwandler (IW) und ein umschaltbares Dämpfungsglied (D) an einen Prüfanschluß (A) für ein Meßgerät gelangen.

## Prüfadapter für einen digitalen Tongenerator.

Die Erfindung betrifft einen Prüfadapter für einen digitalen Tongenerator in einer digitalen Zeitmultiplex-Vermittlungsstelle, der jeweils in den Zeitschlitzen der in dieser Vermittlungsstelle gebildeten Zeitkanäle eine Reihe von digitalen Hör- und Signalisierungstönen an zu dem Koppelfeld der Vermittlungsstelle führende Zeitmultiplex-Leitungen abgibt.

Sowohl in der Fertigung als auch beim Einbau, insbesondere aber während des Betriebs der Vermittlungsstelle ist es erforderlich sämtliche von einem solchen Tongenerator abgegebene Töne überprüfen zu können.

Was die Signalisierungstöne anbelangt, so ist bisher so vorgegangen worden, daß über das Koppelfeld der Vermittlungsstelle eine Sprechwegverbindung zwischen dem zu überprüfenden Tongenerator und einem sowieso schon vorhandenen Signalisierungsempfänger oder Tastwahlempfänger hergestellt wurde, der zusätzlich so ausgestattet war, daß er zur Überprüfung mitausgenutzt werden konnte. (DE-OS 32 35 750).

Zur Überprüfung der Hörtöne wird bisher eine automatische Prüfeinrichtung für Teilnehmersätze herangezogen, die ebenfalls über das Koppelfeld mit dem zu prüfenden Teil des Teilnehmersatzes, hier also mit dem digitalen Tongenerator verbunden wird.

Ein wesentlicher Nachteil dieser Prüfungen besteht darin, daß auf dem Weg von Tongenerator zum Prüfgerät eine ganze Reihe von Teilen der Vermittlungsstelle durchlaufen werden müßen, die ebenfalls als Fehlerquelle für einen nicht ordnungsgemäß empfangenen Ton in Frage kommen, so daß eine Aussage über die Qualität des Tongenerators nur unter Inkaufnahme eines großen Software-Aufwan des durch entsprechende Testprozeduren getroffen werden kann.

Die Aufgabe der vorliegenden Erfindung besteht darin, eine Schaltungsanordnung anzugeben, die das Prüfen eines digitalen Tongenerators im laufenden Betrieb der Vermittlungsstelle ohne Software-Routinen ermöglicht und ohne daß die Prüfergebnisse durch zwischengeschaltete Teile der Vermittlungsstelle verfälscht werden.

Diese Aufgabe wird erfindungsgemäß mit Hilfe eines Prüfadapters gelöst, der dadurch gekennzeichnet ist,

daß er an die genannten Zeitmultiplex-Leitungen sowie an Leitungen anschaltbar ist, über die dem Tongenerator zur Bildung der Zeitkanalzeitschlitze Taktimpulse und Synchronisierimpulse zugeführt werden,

daß er eine einerseits durch die Taktimpulse und Synchronisierimpulse beaufschlagte andererseits durch einen Kanalauswahlschalter beeinflußte Kanalauswahlschaltung,

ferner einen durch einen von der Kanalauswahlschaltung abgegebenen Kanalimpuls getriggerten Digital-Analog-Wandler, dessen Signaleingang die vom Tongenerator erzeugten Digitalsignale zugeführt werden, sowie einen umschaltbaren Impedanzwandler und eine umschaltbare Dämpfungsschaltung aufweist, über die die vom Digital-Analog-Wandler abgegebenen Analogsignale an einen Prüfanschluß für die Anschaltung eines Anzeige- und/oder Meßgeräts gelangen.

Mit Hilfe des erfindungsgemäßen Prüfadapters können Prüfungen eines Tongenerators durchgeführt werden, ohne daß der laufende Betrieb der Vermittlungsstelle beeinträchtigt wird, wobei, obwohl die zu überprüfenden Töne nicht wie bei den vorgenannten Anordnungen Teile der Vermittlungsstelle durchlaufen, dennoch reale Betriebsbedingungen vorliegen.

Eine weitere Ausgestaltung der Erfindung betrifft die Realisierung der Kanalauswahlschaltung, die dadurch gekennzeichnet ist,

daß sie aus einer ersten Zeitschaltung, die aus den Taktimpulsen und den Synchronimpulsen zeitversetzte jeweils einer Kanalnummer zugeordnete Zeitschlitze erzeugt,

ferner aus einem manuell weiterschaltbaren Zähler zur Einstellung einer bestimmten Kanalnummer sowie aus einem Vergleicher besteht, der bei zeitlicher Übereinstimmung der eingestellten Kanalnummer mit dem durch die Zeitschaltung festgelegten Zeitschlitz des gleichnumerierten Kanals den genannten Kanalimpuls abgibt.

Gemäß noch einer weiteren Ausgestaltung der Erfindung kann der erfindungsgemäße Adapter auch für die Durchführung anderweitiger Prüfungen herangezogen werden, indem der Signaleingang seines Digital-Analog-Wandlers mit einer nicht vom Tongenerator beaufschlagten Multiplex-Leitung verbindbar ist und somit auf dieser Leitung auftretende Signale einer Überprüfung unterworfen werden können.

Nachstehend wird die Erfindung anhand eines Ausführungsbeispiels unter Bezugnahme auf eine Figur näher erläutert.

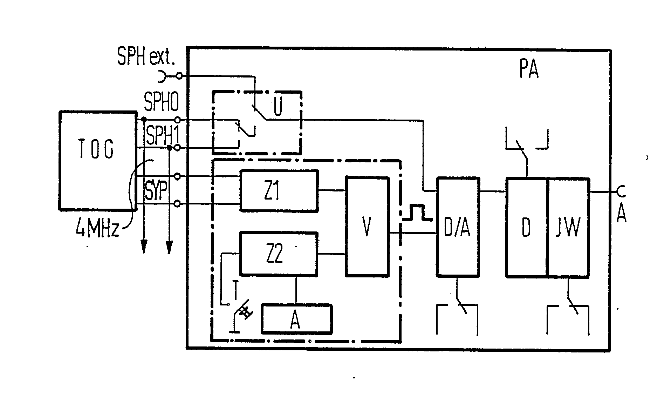

Die Figur zeigt einen digitalen Tongenerator TOG, der auf zwei Multiplex-Leitung SPH0 und SPH1 Hör- und Signalisierungstöne liefert. Die Multiplex-Leitungen führen in hier nicht dargestellter Weise zu einem Gruppenkoppler der Anschlußgruppe einer digitalen Zeitmultiplex-Vermittlungsstelle, zu der der zu überprüfende Tongenerator gehört.

Der Tongenerator TOG ist ferner an eine Taktleitung 4MHz der Vermittlungsstelle, die einen 4 MHz-Takt führt, sowie an eine Leitung SYP der Vermittlungsstelle angeschlossen, auf der ein die Zeitverhältnisse der Vermittlungsstelle festlegender Synchronisierimpuls auftritt.

Die Figur zeigt ferner einen erfindungsgemäß ausgestatteten Prüfadapter PA, der an seinem Einbauplatz auf Anschlußstifte einer Platine aufgesteckt wird, die mit den genannten Multiplex-Leitungen SPH0 und SPH1 sowie den Leitungen 4MHz und SYP in Verbindung stehen. Beim Aufstecken des Prüfadapters wird auch in hier nicht dargestellter Weise eine Verbindung mit der Spannungsversorgung der Vermittlungsstelle hergestellt.

Der Prüfadapter PA enthält als wesentlichen Teil eine Kanalauswahlschaltung, die aus einer Zeitschaltung Z1, einem Zähler Z2 sowie einem Vergleicher V besteht. Die Zeitschaltung Z1 ist durch die genannte Steckverbindung mit den Leitungen 4MHz und SYP verbunden, wird also von Taktimpulsen und Synchronisierimpulsen beaufschlagt und so geartet, daß sie daraus zeitversetzte, jeweils einer Kanalnummer zugeordnete Zeitschlitze definierende Ausgangssignale erzeugt. Der Zähler Z2 kann manuell zur Einstellung der gewünschten Zeitkanalnummern mit Hilfe eines Tasters T weitergeschaltet werden. Die Ausgänge der Schaltungen Z1 und Z2 führen an die Eingänge des Vergleichers V.

Der erfindungsgemäße Prüfadapter weist ferner einen Digital-Analog-Wandler D/A auf, dem einerseits das Ausgangssignal des Vergleichers als Triggersignal sowie die vom digitalen Tongenerator TOG abgegebenen Digitalsignale zugeführt werden, wobei je nach Schaltstellung eines Umschalters U eine Verbindung mit der MultiplexLeitung SPH0 oder der Multiplex-Leitung SPH1 oder einer nicht vom Tongenerator beaufschlagten Multiplex-Leitung SPH hergestellt werden kann.

Der Ausgang des Digital-Analog-Wandlers D/A ist an den Eingang eines Dämpfungsgliedes D angeschlossen, mit dessen Hilfe eine Dämpfung von 6dB eingefügt werden kann. Dem Dämpfungsglied· ist ein Impedanzwandler IW nachgeschaltet, mit dessen Hilfe je nach Einstellung eine Ausgangsimpedanz von 600 Ohm oder eine hochohmige Ausgangsimpedanz eingestellt werden kann. Der Ausgang des Impedanzwandlers IW führt an einen Prüfanschluß A, an den ein Anzeige- und/oder Meßgerät anschaltbar ist.

Zur Prüfung des Tongenerators TOG werden nun mit Hilfe des Tasters T nacheinander jeweils bestimmte Kanalzahlen eingestellt. Immer dann wenn die Zeitschaltung Z1 den dem eingestellten Zeitkanal entsprechenden Zustand erreicht hat gibt der Vergleicher V ein Triggersignal an den Digital-Analog-Wandler D/A ab, der daraufhin das für diesen Zeitkanal vom Tongenerator TOG abgegebene Digitalsignal einer Digital-Analog-Wandlung unterwirft. Das daraus entstehende Analogsignal wird durch das Dämpfungsglied einer Dämpfung von 6dB unterworfen, damit beim Abhören mit Hilfe eines an den Prüfanschluß angeschlossenen Telefonapparats derselbe Höreindruck entsteht wie beim normalen Betriebsablauf, bei dem die vom Tongenerator erzeugten Digitalsignale durch einen auf der Teilnehmeranschlußgruppe befindlichen Digital-Analog-Wandler eine Umwandlung erfahren und über die Teilnehmeranschlußleitung an das Endgerät gelangen. Mit Hilfe des Impedanz-Wandlers, der eine Ausgangsimpedanz von entweder 600/OHm oder eine hochohmige Ausgangsimpedanz hervorruft, ist eine Anpassung an verschiedene Meß- oder Anzeigegeräte möglich.

Der Digital-Analog-Wandler ist für eine Arbeitsweise nach dem A-Gesetz auf eine Arbeitsweise nach dem $\mu$-Gesetz umschaltbar.

Anstelle des erwähnten Telefonapparats kann an den Prüfanschluß zusätzlich oder alternativ auch ein anderes Anzeigegerät, beispielsweise ein Oszillograph angeschlossen werden.

Wie angedeutet ist der erfindungsgemäße Prüfadapter so ausgestattet, daß er auch Prüfungen ermöglicht, die nicht mit dem digitalen Tongenerator TOG in Zusammenhang stehen. Es wird hierzu durch den Umschalter U statt der Multiplex-Leitungen SPH0 oder SPH1 die Multiplex-Leitung SPH an den Eingang des Digital-Analog-Wandlers gelegt, die von einer anderen Stelle des Systems herkommt und demnach andere Signale als Hörtonsignale führt.

## Ansprüche

1. Prüfadapter für einen digitalen Tongenerator in einer digitalen Zeitmultiplex-Vermittlungsstelle, der jeweils in den Zeitschlitzen der in dieser Vermittlungsstelle gebildeten Zeitkanäle ein Reihe von digitalen Hör- und Sinalisierungstönen an zu dem Koppelfeld der Vermittlungsstelle führende Zeitmultiplex-Leitungen abgibt, **dadurch gekennzeichnet,** daß er an die genannten Zeitmultiplex-Leitungen (SPH0, SPH1) sowie an Leitungen (4MHz, SYP) anschaltbar ist, über die dem Tongenerator (TOG) zur Bildung der Zeitkanalzeitschlitze Taktimpulse und Synchronisierimpulse zugeführt werden,

daß er eine einerseits durch die Taktimpulse und Synchronisierimpulse beaufschlagte, andererseits durch einen Kanalauswahlschalter (T) beeinflußte Kanalauswahlschaltung (Z1, Z2, V),

ferner einen durch einen von der Kanalauswahlschaltung abgegebenen Kanalimpuls getriggerten Digital-Analog-Wandler (D/A), dessen Signaleingang die vom Tongenerator (TOG) erzeugten Digitalsignale zugeführt werden,

sowie einen umschaltbaren Impedanzwandler (IW) und eine umschaltbare Dämpfungsschaltung (D) aufweist, über die die vom Digital-Analog-Wandler (D/A) abgegebenen Analogsignale an einen Prüfanschluß (A) für die Anschaltung eines Anzeige- und/oder Meßgerätes gelangen.

2. Prüfadapter nach Anspruch 1,

**dadurch gekennzeichnet,**

daß die Kanalauswahlschaltung aus einer ersten Zeitschaltung (Z1) die aus den Taktimpulsen und den Synchronisierimpulsen zeitversetzte, jeweils einer Kanalnummer zugeordnete Zeitschlitze erzeugt,

ferner aus einem manuell weiterschaltbaren Zähler (Z2) zur Einstellung einer Kanalnummer sowie aus einem Vergleicher (V) besteht, der bei zeitlicher Übereinstimmung der eingestellten Kanalnummer mit dem durch die Zeitschaltung (Z1) bestimmten Zeit schlitz. des gleich numerierten Kanals den genannten Kanalimpuls abgibt.

3. Prüfadapter nach Anspruch 1 oder 2,

**dadurch gekennzeichnet,**

daß der Signaleingang des Digital-Analog-Wandlers (D/A) mit einer nicht vom Tongenerator (TOG) beaufschlagten Multiplex-Leitung (SPH) verbindbar ist.

0 292 769